# EUROPEAN PATENT APPLICATION

(11) **EP 1 610 537 A1**
(43) Date of publication of application: **28.12.2005**
(21) Application number: 04015005.4
(22) Date of filing: 25.06.2004
(51) Int. Cl.: H04M 3/42

(54) **Assignment and individual configuration of communications equipment comprising randomly selected workstations**

(71) Applicant: SIEMENS AKTIENGESELLSCHAFT, 80333 München (DE)
(72) Inventor: Handel, Peter, 80689 München (DE); Schimper, Thomas, 81547 München (DE)

(57) **Abstract**

A system enables free seating of an arrangement of a plurality of workstations for at least one user or coworker having a predetermined user profile associated with a telecommunications network. The user profile indicates individual user settings for the at least one user. The user workstation randomly selected by the user from among the plurality of workstations. A terminating point, such as a telephone, of the telecommunications network is situated in an area of the workstation and has an associated call number #A and an associated port #a. A blind port #u assigned to the user that is set to a not-connected state as long as the user is not stationed at any of the plurality of workstations. A switch of the telecommunications network swaps the port #a of the workstation with the blind port #u, in response to the user selecting the workstation, and as a result of the swapping the workstation and terminating point have the user profile indicating individual user settings.

## Description

Companies, especially banks and insurance firms, service customers in a client-interactive environment wherein clients are freely met in a meeting area and then serviced. Typically, the client is led to one of many workstations where the coworker logs on and accesses information to assist the client or customer.

In high tech companies, there is similarly an open environment wherein employees are encouraged to interact with other coworkers and customers in open air meeting areas. Often, there are workstations that are available for use of any of the coworkers.

Similarly, employees of stock brokering firms typically are rushing from one desk to another with the latest investment reports. At a moments notice, any one of them may have to access a terminal in order to place a buy/sell order for their clients.

In the simplest application, companies may simply desire to rearrange employees. In this case, it is required to rewire the coworkers IT equipment. This means that the company has to employ expensive IT staff in order to rewire the employees equipment. This is not only computer equipment, but also telephone and back office connectivity. If several employees or a department is being moved, the IT connecting can be a nightmare.

What these companies need is "free seating" functionality, whereby any coworker can sit at any workstation freely and log on to the randomly selected workstation with all of the user settings, or at least a sub-set thereof.

Although free seating has been attempted in the past, these attempts all have had their deficiencies. Many solutions of the past utilize a LAN backbone to control the assignment and reassignment of user settings. However, the LAN has no control over the other IT equipment. Thus, such LAN based solutions are incomplete. Furthermore, the LAN has no information over the other IT equipment and cannot update the local workstation where the end user has logged on.

### OBJECTIVES & SUMMARY OF THE INVENTION

It is an object of the invention to provide free seating.

It is an object of the invention to provide a user profile for any randomly selected work station.

It is an object of the invention to provide a user profile for all IT equipment at a randomly selected work station.

It is an object of the invention to provide free seating for a financial institution.

It is an object of the invention to provide a blind port for each of the users not-connected.

A system enables free seating of an arrangement of a plurality of workstations for at least one user or coworker having a predetermined user profile associated with a telecommunications network. The user profile indicates individual user settings for the at least one user. The user workstation randomly selected by the user from among the plurality of workstations. A terminating point, such as a telephone, of the telecommunications network is situated in an area of the workstation and has an associated call number #A and an associated port #a. A blind port #u assigned to the user that is set to a not-connected state as long as the user is not stationed at any of the plurality of workstations. A switch of the telecommunications network swaps the port #a of the workstation with the blind port #u, in response to the user selecting the workstation, and as a result of the swapping the workstation and terminating point have the user profile indicating individual user settings.

The invention also encompasses a method for enabling free seating of an arrangement of a plurality of workstations for at least one user having a predetermined user profile associated with a telecommunications network. The user profile indicates individual user settings for the at least one user. The method includes selecting at random a workstation from amongst the plurality of workstations. Next, a Destination Number (DN) is obtained representing a port #a of a terminating point situated in an area of the workstation. Then, swapping is performed by a switch of the telecommunications network a blind port #u that has a not-connected state associated with the at least one user with the port #a.

From the users point of view, the inventive solution acts thereby as a key feature in the IP periphery. The coworker sits down at any free desk and logs into the PC standing there. After Logon the telephone standing beside this PC should be the telephone of the coworker, with its call number and profile (feature, abbreviated dialing list, etc.).

### BRIEF DESCRIPTION OF DRAWINGS

- Figure 1: illustrates a system diagram of the present invention;
- Figure 2: illustrates a system diagram of a variation of the present invention;
- Figure 3: illustrates a table of the database of the present invention; and
- Figures 4A-C: illustrate a task flow of the ports of the present invention.

### DETAILED DESCRIPTION

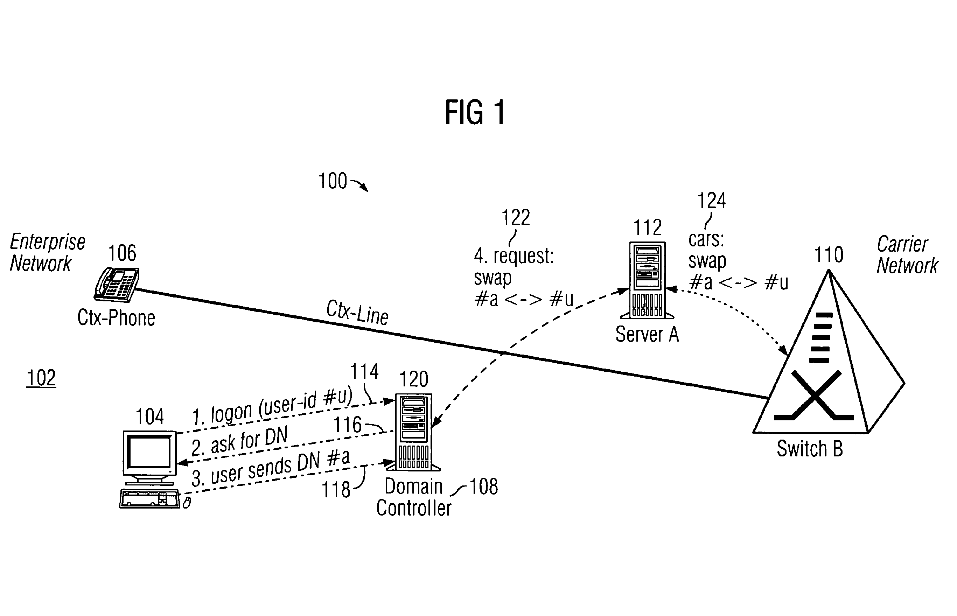

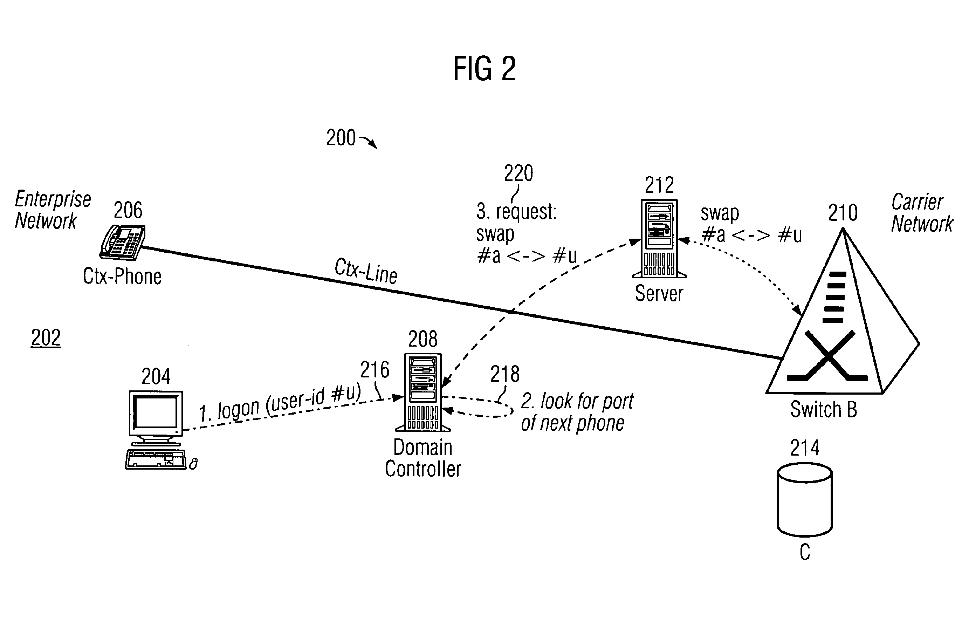

The inventive system 100 will be described with reference to Figure 1, wherein there is shown several workstations 102, in each case equipped with PC 104 and telephone 106. A Domain Controller (DC) 108, with which a coworker with his PC 104 logs in. A switch B 110 of a carrier network or other telecommunications network, such as a PBX, is provided. A server A 112 may provide an application for the database configuration of the switch B 110. The functionality of the server A 112 can alternatively be integrated in the Domain Controller (DC) 108 or in the switch B 110. Optionally, an additional database C (Figure 2), that contains the data over the physical allocation between the PC 104 and telephone 106 may be provided.

Now in explanation, each telephone allocated a status "a" indicates that the telephone is connected to an unused workstation. This telephone is assigned a call number "A" and given a reduced set of assigned by capability characteristics.

Concurrently therewith, each coworker is assigned a call number "U" those, as long as he does not occupy a workstation, is assigned in the switch 110 a not-connected status "u", herein referred to as a "Blind port". Although this connection is not connected, this connection will, however, be furnished with capability characteristics, e.g. call forwarding.

The Login procedure of a coworker at the PC implies a state exchange between "a" and "u". Therewith, the telephone at the connection maintains the call number "a", the capability characteristics and the profile settings of the call number "U". When the user logs off, the exchange is again cancelled.

With the invention, the interface between PC and Domain Controller protocol and communication mechanisms are irrelevant. In the embodiment shown in Figure 1, the Logon Script handles the request to connect to the telephone number on the display of the telephone stationed next to the PC. Further , the interface between Domain Controllers and server A protocol and communication mechanism are arbitrary. These can be realized with known technologies (e.g. Java RMI or HTTP XML).

Interface between server A and switch B protocol and communication mechanism can be realized also here in an arbitrary way. As a rule, the interface here will be administrated proprietarily to ensure a secure protocol. As a concrete example, Siemens SURPASS hiE will use the CARS Datalink. There is also an optional interface between Domain Controllers and database C, e.g. LDAP.

Now, the taskflow, which can also be interpreted as a method form, will be described with reference to Figure 1. First, the PC 104 sends the logon message for the user-id #u to the domain controller 108 DC as indicated generally by reference 114. Then, as indicated by reference 116, a DC logon script asks for the actual DN #a of the phone 106 next to the PC 104 and the DC 108 determines 120 the DN #u associated with the user-id #u. The domain controller 108 transfers the swap request to the Server A 112 as indicated by reference 122. Next, the DC 108 sends a swap request (DN#a := DN#u) via Server A 112 to Switch B 110, as indicated by 124. After the swap is performed by the Switch B 110, reference 124, the user #u has his DN with all features and settings on the phone at his workplace. Consequently, DN #a is assigned to a blind port with call diversion to the attendant.

When the user logs off, the reverse swap is executed and the user #u is then assigned to the original blind port. Depending on the individual settings of the user, a call diversion to the attendant or a voice mail box or a mobile phone is activated.

Figure 2 illustrates a variation 200 of the invention wherein the same general elements are illustrated. As in Figure 1, there is shown several workstations 202, in each case equipped with PC 204 and telephone 206. A Domain Controller (DC) 208, with which a coworker with his PC 204 logs in. A switch B 210, or other telecommunications equipment, is provided. A server A 212 may provide an application for the database configuration of the switch B 210. The functionality of the server A 212 can alternatively be integrated in the Domain Controller (DC) 208 or in the switch B 210. In addition, a database C 214 that contains the data over the physical allocation between the PC 204 and telephone 206 may be provided.

The task flow will now be described for the second variant. As indicated by 216, the PC 204 sends the logon command for user-id #u to the DC 208. In 218, the DC logon script searches a Configuration DB (not shown) for the actual DN #a of the phone next to the PC 204. Then, as referenced by 220, the DC 208 looks for the DN #u associated with the user-id #u and the DC 208 sends a swap request (DN#a := DN#u) via Server A to Switch B. At this point, the user #u has his DN with all of the features and settings on the phone at his workplace. The phone #a is assigned to a blind port with call diversion to the attendant.

As in the first variant, when the user logoff, the reverse swap is executed. That is, user #u is assigned to the original blind port and, depending on the individual settings of the user, a call diversion to the attendant or a voice mail box or a mobile phone is activated.

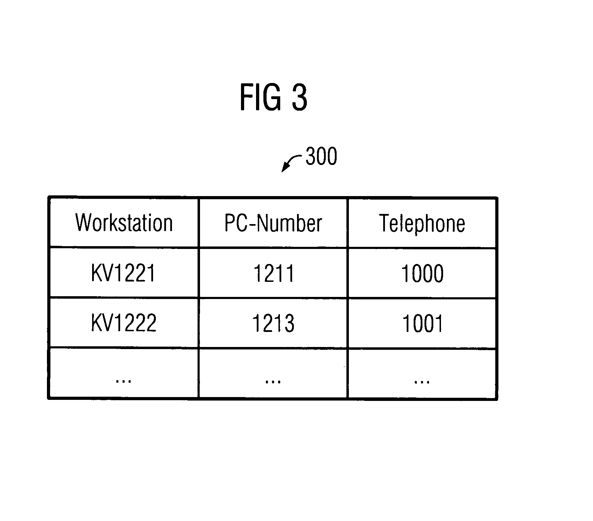

Now turning to the configuration data bank, the allocation between the PC and the telephone is stored. In particular, the configuration databank, contains the data 300 illustrated in Figure 3, wherein the workstation name 302, the PC number and the telephone 304 is stored. When Logging on, the telephone - PC allocation can be determined and switched automatically.

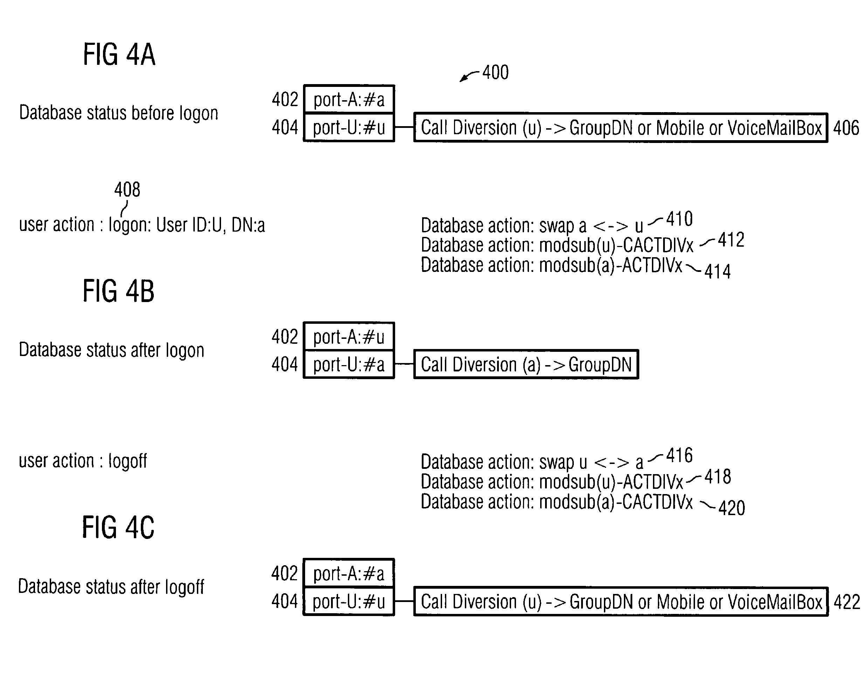

The process 400 by which the database of the communication system is configured will now be described with reference to Figures 4A-C. Port A 402 is a physical and real existing port, on which the telephone depends. As long as no coworker utilizes the phone, it is given the call number A. Port U 404 is a "Blindport", which is furnished on a physical non-existing Port. This is the arrangement in the case that coworkers are not logged into their assigned telephone number. In this state, for example, a call forward to the central office or a mobile DN or Voicemail-Box, can be assigned to the DN.

Figure 4A illustrates the situation before Log On. The telephone will be reached over port-A: : #a. Call diversions 406 to termination points, such as Voicemail, Mobile or Central Office, will be handled by Port-U:#u. Then, the user Logs On, such as shown by reference 408. In response, the database swaps the ports a and u as illustrated by 410 using, for example, the command swap a<->u. In 412, the database executes the action modsub(u)-CACTDIVx in order to substitute the port address a into u. On the other hand, the database executes the action modsub (a)-ACTDIVx in order to substitute the port address u into a. At this time, the ports are swapped and the coworker's character set now exists on the workstation, PC, telephone and other IT equipment, where the coworker has randomly selected and sat down in front of.

Figure 4B illustrates the situation after Log On. Here port-A 402 now is assigned #u and port-U 404 is assigned #a. Now, any call diversions are redirected according to port a's profile. As shown in the Figure, presently placed Telephone calls to call number a are transferred over port #u to, for example, the central office.

Figure 4C illustrates the situation when the user Logs Off. In this case, the database swaps the ports u and a as illustrated by 416 using, for example, the command swap u<->a. In 418, the database executes the action modsub(u)-ACTDIVx in order to substitute the port address u back into a. On the other hand, the database executes the action modsub (a)-CACTDIVx in order to substitute the port address a back into u. At this time, the ports are returned to their original designation and the workstation returns to a normal arbitrary workstation. Thus, the call diversion, as illustrated by 422, occurs as before the ports were swapped.

It will be appreciated that the present invention provides several advantages. Amongst others, the workstations do not need to be rewired in any fashion. Further, the full character set of call capability functions of the particular user are transferred to any of a plurality of workstations. Further, all IT equipment is reconfigured, not only the PC, offering a true free seating functionality.

## Claims

1. A system for enabling free seating of an arrangement of a plurality of workstations for at least one user having a predetermined user profile associated with a telecommunications network indicating individual user settings for the at least one user, comprising:
a workstation randomly selected by the user from among the plurality of workstations;
a terminating point of the telecommunications network situated in an area of the workstation having an associated call number #A and an associated port #a;
a blind port #u assigned to the user that is set to a not-connected state as long as the user is not stationed at any of the plurality of workstations; and
a switch of the telecommunications network for swapping the port #a of the workstation with the blind port #u, in response to the user selecting the workstation, and as a result of the swapping the workstation and terminating point have the user profile indicating individual user settings.

2. The system of claim 1, further comprising a database having stored an allocation between the workstation and the terminating point.

3. The system of claim 2, wherein the database further stores the port #a of the terminating point.

4. The system according to any of the previous claims, wherein the terminating point is a telephone.

5. The system according to any of the previous claims, wherein the user profile consists of at least one of the following, a call diversion to an attendant, a voice mail box and a mobile phone is activated.

6. A method for enabling free seating of an arrangement of a plurality of workstations for at least one user having a predetermined user profile associated with a telecommunications network indicating individual user settings for the at least one user, comprising the steps of:
selecting at random a workstation from amongst the plurality of workstations;
obtaining a Destination Number (DN) representing a port #a of a terminating point situated in an area of the workstation; and
swapping by a switch of the telecommunications network a blind port #u that has a not-connected state associated with the at least one user with the port #a.

7. The method of claim 6, further comprising the step storing an allocation on a database between the workstation and the terminating point.

8. The method of any of the claims 6-7, further comprising the step of requesting a switch of the telecommunications network to perform the step of swapping.

9. The method of any of the claims 6-8, further comprising the step of logging on to a workstation randomly from among the plurality of workstations;

10. The method of any of the claims 6-9, further comprising the step of sending a log on command to the logging on step to a domain controller.
